(19) Europäisches Patentamt
European Patent Office
Office européen des brevets

(11) EP 4 783 734 A1

(12) EUROPEAN PATENT APPLICATION
published in accordance with Art. 153(4) EPC

(43) Date of publication:
29.07.2026 Bulletin 2026/31

(51) International Patent Classification (IPC):
H05B 3/34 (2006.01)     H05B 3/40 (2006.01)
F24H 3/04 (2022.01)

(21) Application number: 24905367.9

(22) Date of filing: 08.04.2024

(52) Cooperative Patent Classification (CPC):
A47J 37/01; A47J 37/06; F24H 3/04; H05B 3/06;
H05B 3/14; H05B 3/34; H05B 3/40; H05B 3/44

(86) International application number:
PCT/CN2024/086629

(87) International publication number:
WO 2025/129854 (26.06.2025 Gazette 2025/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.12.2023 CN 202311793122

(71) Applicants:
• Guangdong Midea Kitchen Appliances
Manufacturing Co., Ltd.
Foshan, Guangdong 528311 (CN)
• Midea Group Co., Ltd.
Foshan, Guangdong 528311 (CN)

(72) Inventors:
• SUN, Yanjun
Foshan, Guangdong 528311 (CN)
• HE, Qingping
Foshan, Guangdong 528311 (CN)
• DENG, Shengfu
Foshan, Guangdong 528311 (CN)
• RAO, Jie
Foshan, Guangdong 528311 (CN)

(74) Representative: RGTH
Patentanwälte PartGmbB
Mönckebergstraße 11
20095 Hamburg (DE)

(54) GRAPHITE HEATING TUBE AND COOKING DEVICE

(57) Provided are a graphite heating tube and a cooking device. The graphite heating tube comprises: a tube body (10), where the tube body (10) is hollow and has at least one bent portion (11), each of the at least one bent portion being formed as a circular arc shape, where the bent portion has a reference line passing through a center of the bent portion and being perpendicular to a radial direction of the bent portion; and a heating member (20) formed as a sheet-shaped graphene-material member and passing through the tube body, where the heating member has a neutral surface (F1) located at a center of the heating member in a thickness direction of the heating member, the neutral surface extending in a length direction of the tube body, and at least a portion of the neutral surface that faces the bent portion being arranged parallel to the reference line.

FIG. 1

## Description

## CROSS-REFERENCE TO RELATED APPLICATION

This application is based on and claims priorities to Chinese patent application No. 202311793122.6, titled "GRAPHITE HEATING TUBE AND COOKING DEVICE" and filed on December 22, 2023, the entire contents of which are incorporated herein by reference.

## FIELD

The present disclosure relates to the field of cooking appliances technologies, and more particularly, to a graphite heating tube and a cooking device.

## BACKGROUND

In the related art, a graphite heating tube is formed by vacuum-encapsulating a graphite sheet into a quartz tube. However, the graphite sheet is relatively thin and prone to twisting, cracking, and other defects during insertion into a curved quartz tube, resulting in a high reject rate.

## SUMMARY

The present disclosure aims to solve at least one of the technical problems in the related art. To this end, the present disclosure provides a graphite heating tube and improves a yield rate.

The graphite heating tube according to the embodiments of the present disclosure comprises: a tube body, where the tube body is hollow and has at least one bent portion, the at least one bent portion being formed as a circular arc shape, where a reference line is defined as a line passing through a center of the bent portion and perpendicular to a radial direction of the bent portion; and a heating member formed as a sheet-shaped graphene-material member, the heating member being disposed in and passing through the tube body, where the heating member is provided with a neutral surface centrally located in a thickness direction of the heating member, the neutral surface extending in a length direction of the tube body, and at least a portion, facing the bent portion, of the neutral surface being arranged parallel to the reference line.

The graphite heating tube according to the embodiments of the present disclosure is configured such that at least the portion of the neutral surface that faces the bent portion is parallel to the reference line, so that the heating member is not twisted by external forces, allowing the heating member to be smoothly inserted into the tube body, thus improving the yield rate, significantly enhancing production efficiency, and saving costs.

In another exemplary embodiment of the present disclosure, a curvature radius of a central axis of the bent portion is R1, and a curvature radius of the portion, facing the bent portion, of the neutral surface is R2, R1 and R2 satisfying $0.95 \leq (R2/R1) \leq 1.05$.

In another exemplary embodiment of the present disclosure, the heating member comprises a plurality of heating units sequentially arranged in a length direction of the heating member. Each of the plurality of heating units is formed as a curved segment with an opening facing towards a first direction. Adjacent heating units of the plurality of heating units are connected by a connection sheet.

In another exemplary embodiment of the present disclosure, the connection sheet is connected to an end of the curved segment.

In another exemplary embodiment of the present disclosure, each of the plurality of heating units comprises two heating side walls arranged in parallel. A spacing between the two heating side walls is a first spacing. A spacing between adjacent heating units of the plurality of heating units is a second spacing, the first spacing being equal to the second spacing.

In another exemplary embodiment of the present disclosure, the first spacing is 0.5 mm. A thickness of the heating member ranges from 0.1 mm to 0.3 mm.

In another exemplary embodiment of the present disclosure, the thickness of the heating member is 0.2 mm.

In another exemplary embodiment of the present disclosure, the tube body is a circular tube.

In another exemplary embodiment of the present disclosure, each of two ends of the heating member in a length direction of the heating member is connected to a connection terminal, the connection terminal being press-sealed and fixed to the tube body, and a portion of the connection terminal extending out of the tube body.

In another exemplary embodiment of the present disclosure, the connection terminal comprises a main body portion and an encapsulation portion. The main body portion is connected to the heating member. The encapsulation portion is connected to the main body portion, and is press-sealed and fixed to the tube body. An included angle is formed between the main body portion and the encapsulation portion.

In another exemplary embodiment of the present disclosure, the main body portion is arranged to be perpendicular to the encapsulation portion.

The cooking device according to the embodiments of the present disclosure comprises the above-described graphite heating tube.

The cooking device according to the embodiments of the present disclosure is configured such that at least the portion, facing the bent portion, of the neutral surface is parallel to the reference line, so that the heating member is not twisted by the external forces, allowing the heating member to be smoothly inserted into the tube body, thus improving the yield rate, significantly enhancing the production efficiency, and saving the costs.

In another exemplary embodiment of the present disclosure, the cooking device comprises: a box body having a drawing opening at a front side of the box body; a drawer member for holding food, the drawer member being drawable relative to the box body through the drawing opening; and the graphite heating tube disposed in the box body to heat an interior of the box body.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

The above and/or additional aspects and advantages of the present disclosure will become more apparent and readily understood from the following description of embodiments taken in conjunction with the accompanying drawings.

FIG. 1 is a schematic view of a graphite heating tube according to a first embodiment of the present disclosure, in which the graphite heating tube is in a state ready for press-sealing.

FIG. 2 is a schematic view of a shape of a tube body after being press-sealed according to a first embodiment of the present disclosure, in which the tube body is partially cut away.

FIG. 3 is a schematic view showing curvatures of central axes of various parts of a tube body according to an embodiment of the present disclosure.

FIG. 4 is a schematic structural view of a heating member according to an embodiment of the present disclosure.

FIG. 5 is a partially enlarged view of a part I in FIG. 4.

FIG. 6 is a schematic view of a sweeping path formed after a heating member is positioned in a tube body according to an embodiment of the present disclosure.

FIG. 7 is a first schematic view of engagement between a heating member and an annular tube according to an embodiment of the present disclosure.

FIG. 8 is a partially enlarged view of a part II in FIG. 7.

FIG. 9 is a first schematic view of engagement between a heating member and a U-shaped tube according to an embodiment of the present disclosure.

FIG. 10 is a partially enlarged view of a part III in FIG. 9.

FIG. 11 is a first schematic view of engagement between a heating member and an S-shaped tube according to an embodiment of the present disclosure.

FIG. 12 is a partially enlarged view of a part IV in FIG. 11.

FIG. 13 is an exploded view of a graphite heating tube according to an embodiment of the present disclosure.

FIG. 14 is a schematic view of a graphite heating tube according to a second embodiment of the present disclosure, in which the graphite heating tube is in a state ready for press-sealing.

FIG. 15 is a schematic view of a shape of a graphite heating tube after being press-sealed according to a second embodiment of the present disclosure, in which a tube body is partially cut away.

FIG. 16 is a schematic view of an included angle $\theta$ according to an embodiment of the present disclosure.

FIG. 17 is a schematic view of engagement between a heating member and a straight tube according to an embodiment of the present disclosure.

FIG. 18 is a partially enlarged view of a part V in FIG. 17.

FIG. 19 is a second schematic view of engagement between a heating member and an annular tube according to an embodiment of the present disclosure.

FIG. 20 is a third schematic view of engagement between a heating member and an annular tube according to an embodiment of the present disclosure.

FIG. 21 is a second schematic view of engagement between a heating member and a U-shaped tube according to an embodiment of the present disclosure.

FIG. 22 is a third schematic view of engagement between a heating member and a U-shaped tube according to an embodiment of the present disclosure.

FIG. 23 is a second schematic view of engagement between a heating member and an S-shaped tube according to an embodiment of the present disclosure.

FIG. 24 is a third schematic view of engagement between a heating member and an S-shaped tube according to an embodiment of the present disclosure.

Reference numerals in the accompanying drawings:

100, graphite heating tube;
10, tube body; 11, bent portion;
20, heating member; 22, heating unit; 221, heating side wall; 23, connection terminal; 231, main body portion; 232, encapsulation portion;
F1, neutral surface; F2, pressing block; L1, first spacing; L2, second spacing.

## DETAILED DESCRIPTION OF THE EMBODIMENTS

Embodiments of the present disclosure will be described in detail below with reference to the accompanying drawings, throughout which same or similar elements, or elements having same or similar functions, are denoted by same or similar reference numerals. The embodiments described below with reference to the drawings are illustrative only, and are intended to explain, rather than to limit, the present disclosure.

A graphite heating tube 100 according to the embodiments of the present disclosure will be described below with reference to the accompanying drawings.

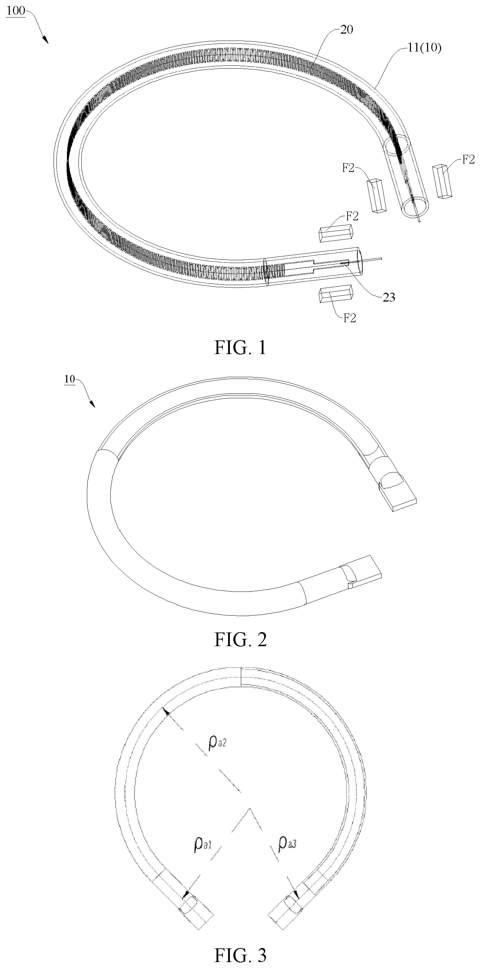

As illustrated in FIG. 1, the graphite heating tube 100 according to the embodiments of the present disclosure comprises a tube body 10 and a heating member 20.

The tube body 10 is hollow and has at least one bent portion 11, each of the at least one bent portion 11 being formed as a circular arc shape. A reference line of the bent portion 11 is defined as a line passing through a center of the bent portion 11 and perpendicular to a radial direction of the bent portion 11.

The reference line is a virtual line. The present disclosure defines the reference line as the virtual line that passes through the center of the bent portion 11 and is perpendicular to the radial direction of the bent portion 11 of the tube body 10.

In an exemplary embodiment of the present disclosure, the tube body 10 has at least one bent portion 11, and each of the at least one bent portion 11 is formed as the circular arc shape. For example, an overall external shape of the tube body 10 is U-shaped, and a middle portion of the U-shaped tube is a circular arc-shaped bent portion 11. Alternatively, the overall external shape of the tube body 10 is S-shaped, and a plurality of portions of the S-shaped tube are all circular arc-shaped. Alternatively, the overall external shape of the tube body 10 is annular, and each portion of the annular tube is circular arc-shaped.

The heating member 20 is formed as a sheet-shaped graphene-material member and passes through the tube body 10. A neutral surface F1 of the heating member 20 is located at a center of the heating member 20 in a thickness direction of the heating member 20. The neutral surface F1 extends in a length direction of the tube body 10. At least a portion, facing the bent portion 11, of the neutral surface F1 is arranged parallel to the reference line.

The graphene-material member itself has excellent thermal conductivity and heat dissipation capabilities. The graphite heating tube 100 of the present disclosure utilizes capabilities of the graphene-material member to endow the graphite heating tube 100 with advantages of a fast heating speed and strong radiation.

The neutral surface F1 is a virtual surface. The present disclosure defines the neutral surface F1 as the virtual surface located at the center of the heating member 20 in the thickness direction of the heating member 20 and extending in the length direction of the tube body 10.

In the related art, the graphite heating tube is formed by vacuum-encapsulating a graphite sheet into a quartz tube. However, the graphite sheet is relatively thin and prone to twisting, cracking, and other defects during insertion into a curved quartz tube, resulting in a high reject rate.

In the present disclosure, at least the portion, facing the bent portion 11, of the neutral surface F1 is arranged to be parallel to the reference line, in such a manner that the heating member 20 is not twisted by external forces, allowing the heating member 20 to be smoothly inserted into the tube body 10, thus improving a yield rate, significantly enhancing production efficiency, and saving costs.

The graphite heating tube 100 according to the embodiments of the present disclosure is configured such that at least the portion, facing the bent portion 11, of the neutral surface F1 is parallel to the reference line, so that the heating member 20 is not twisted by the external forces, allowing the heating member 20 to be smoothly inserted into the tube body 10, thus improving the yield rate, significantly enhancing the production efficiency, and saving the costs.

In another exemplary embodiment of the present disclosure, a curvature radius of a central axis of the bent portion 11 is R1, and a curvature radius of the portion, facing the bent portion 11, of the neutral surface F1 is R2, R1 and R2 satisfying $0.95 \leq (R2/R1) \leq 1.05$. Based on the inventor's summary of years of experience and summarization of a large amount of data, by setting $0.95 \leq (R2/R1) \leq 1.05$, the heating member 20 can further be smoothly inserted into the hollow tube body 10, preventing the inserted heating member 20 from stretching, twisting, bending and other defects, and improving the yield rate.

In an exemplary embodiment of the present disclosure, R1 is the curvature radius of the central axis of the bent portion 11. It should be noted that the central axis of the bent portion 11 is different from the bent portion 11. The bent portion 11 is formed as the circular arc shape and is a component with a certain volume. A portion of the bent portion 11 adjacent to the center and a portion of the bent portion 11 away from the center have different curvature radii. The central axis is a virtual line, and the curvature radius of the central axis is different from curvature radii of other portions of the bent portion 11.

In the present disclosure, the curvature radius of the portion of the neutral surface F1 that faces the bent portion 11 is associated with the curvature radius of the central axis of the bent portion 11, that is, a portion of the neutral surface F1 located in the bent portion 11 is associated with the central axis of the bent portion 11, where $0.95 \leq (R2/R1) \leq 1.05$, in such a manner that the heating member 20 is close to the central axis of the bent portion 11 in the bent portion 11, preventing the heating member 20 from being excessively bent and reducing probability of stretching, twisting, bending and other phenomena of the heating member 20.

For example, R2/R1 is 1, that is, the central axis of the bent portion 11 lies within the neutral surface F1 of the heating member 20, and the heating member 20 maintains a certain distance from an inner wall of the tube body 10, thus reducing the probability of stretching, twisting, bending and other phenomena of the heating member 20. Alternatively, R2/R1 is 0.95. Alternatively, R2/R1 is 0.97. Alternatively, R2/R1 is 1.02. Alternatively, R2/R1 is 1.05.

In an exemplary embodiment of the present disclosure, in the related art, during encapsulation of the graphite heating tube, a graphite sheet with a connection terminal at each of two ends is firstly inserted into a quartz tube. Two ends of the quartz tube are heated and melted, pressed by a pressing block, and cooled to integrally press-seal the graphite sheet and the quartz tube. The graphite sheet is in a form of a sheet and located in a plane. When the graphite sheet is inserted into the quartz tube, the graphite sheet may be positioned arbitrarily relative to a sweeping neutral surface of the quartz tube. Since the graphite sheet is extremely thin, a positioning state formed when the graphite sheet is inserted into the quartz tube and resulting encapsulation process parameters directly determine a yield rate of manufacturing of the graphite heating tube.

A curved quartz tube, as an outer protective sleeve of the graphite heating tube, is also designed into different shapes based on a spatial position of a product. A curved shape comprises a circular shape, a U-shape, an S-shape and the like. As illustrated in FIG. 2 and FIG. 3, a sweeping centerline of the quartz tube is positioned in an XOY plane coordinate system to form a functional relationship y1=f(x) of the sweeping center line. A calculation formula of the curvature radius is as follows:

$$\rho = \frac{\left(1 + y^{\cdot 2}\right)^{3/2}}{|y^{\cdot\cdot}|},$$

In the above calculation formula, $y\cdot$ represents $d(y)/d(x)$, and $y\cdot\cdot$ represents $d^2(y)/d(x^2)$. Substituting the functional relationship of the sweeping centerline of the quartz tube into the calculation formula of the curvature radius yields a curvature radius $\rho a$ of the sweeping centerline of the quartz tube. The curved quartz tube is generally formed by connecting several arc segments. Assuming that curvature radii of respective segments are $\rho a1$, $\rho a2$, $\rho a3$, etc., in an exemplary embodiment of the present disclosure, the formula for the curvature radius is common knowledge and will not be repeated here.

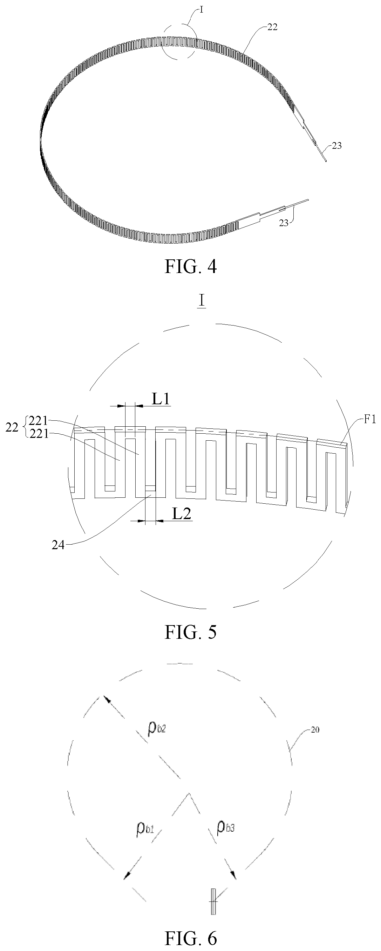

Before the graphite sheet is introduced into the quartz tube for press-sealing and melting, a positioning state of the graphite sheet after being inserted into the quartz tube is determined. As illustrated in FIG. 4, FIG. 5, and FIG. 6, the sweeping centerline of the positioned graphite sheet is also positioned in the XOY plane coordinate system to form a functional relationship y2=f(x) of the sweeping centerline of the graphite sheet. Substituting the functional relationship of the sweeping centerline of the graphite sheet into the calculation formula of the curvature radius yields a curvature radius $\rho b$ of the sweeping centerline of the graphite sheet. Curvature radii of the sweeping path of the positioned graphite sheet in the curved quartz tube are $\rho b1$, $\rho b2$, $\rho b3$, etc. Therefore, a curvature radius ratio $\lambda = \rho b / \rho a$ between the graphite sheet and the quartz tube at each segment is calculated. The curvature radius ratio $\lambda$ is R2/R1.

The present disclosure proposes that R2/R1 is in a range of 0.95 to 1.05, and ensures that a bending direction of the heating member 20 is consistent with a bending direction of the tube body 10, thus forming optimal process parameters for a positioning relationship between the heating member 20 and the tube body 10. Under the optimal parameters, the heating member 20 can be smoothly inserted into various curved tube bodies, especially an annular tube, a U-shaped tube, an S-shaped tube and the like.

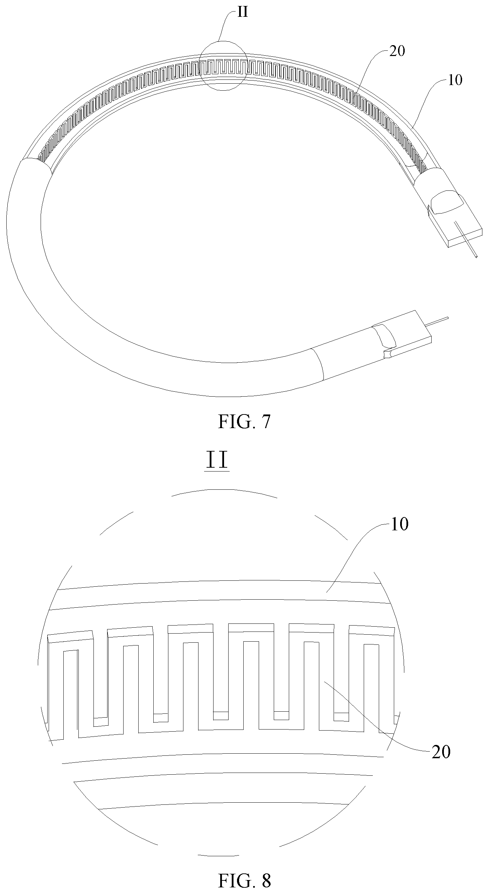

In an exemplary embodiment of the present disclosure, by positioning the annular tube based on optimal positional relationship process parameters proposed in the present disclosure, the annular tube as illustrated in FIG. 7 and FIG. 8 can be successfully obtained. After the heating member 20 is encapsulated into the tube body 10, a partial enlarged view of the heating member 20 shows that an offset angle between the heating member 20 and a sweeping plane is less than 5°. Thus, the heating member 20 is less likely to be in contact with the inner wall of the tube body 10. Meanwhile, each tooth shape of the heating member 20 is uniformly distributed, and stretching, twisting and bending are less likely to occur. After melting, pressing, and cooling, cracks on the heating member 20 are rarely found.

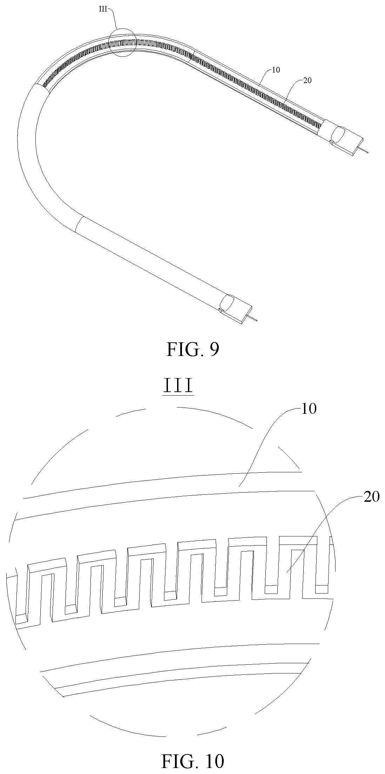

In an exemplary embodiment of the present disclosure, by positioning the U-shaped tube based on the optimal positional relationship process parameters proposed in the present disclosure, the U-shaped tube as illustrated in FIG. 9 and FIG. 10 is obtained. Each tooth shape of the heating member 20 is uniformly distributed, and the offset angle of the heating member 20 is less than 5°. After forming, defects such as cracks, excessive stretching, twisting, and bending of the heating member 20 are rarely found.

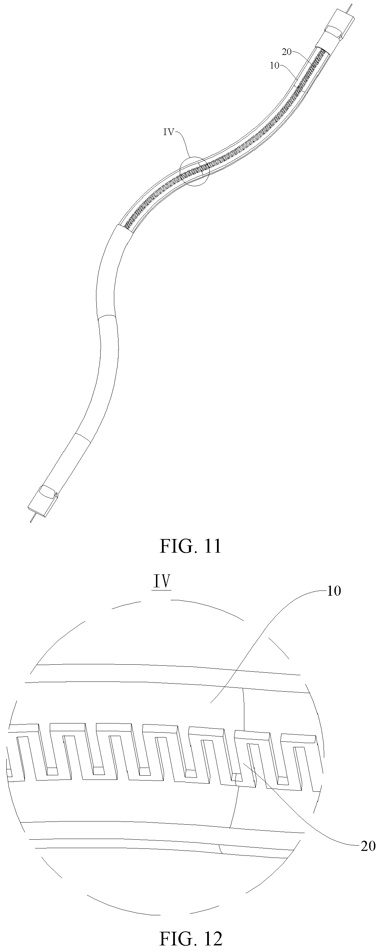

In an exemplary embodiment of the present disclosure, by positioning the S-shaped tube based on process parameters of the present disclosure, the S-shaped tube as illustrated in FIG. 11 and FIG. 12 is obtained. It can also be seen that tooth shapes of the heating member 20 are uniformly distributed without significant local stretching, twisting, bending, and other phenomena, and no cracked graphite sheets are observed after forming.

By setting the positioning state of the heating member 20 in various curved tube bodies according to the present disclosure, the resulting optimal positioning process parameters allow the heating member 20 to be smoothly inserted into the tube body 10. The heating member 20 with damages such as stretching, twisting, and bending is rarely found, thus ensuring integrity and reliability of the encapsulation of the heating member 20.

9      EP 4 783 734 A1      10

Through the process of the present disclosure, a yield rate of the encapsulation and manufacturing of the heating member 20 is increased by more than 23%, production efficiency of the graphite heating tube 100 is greatly improved, optimal process support is provided for mass production and high-yield-rate production of the graphite heating tube 100, and considerable manufacturing costs are saved.

As illustrated in FIG. 4 and FIG. 5, in another exemplary embodiment of the present disclosure, the heating member 20 comprises a plurality of heating units 22 sequentially arranged in a length direction of the heating member 20. Each of the plurality of heating units 22 is formed as a curved segment with an opening facing towards a first direction. Adjacent heating units 22 of the plurality of heating units 22 are connected by a connection sheet. By means of heating by the plurality of heating units 22 sequentially arranged in the length direction of the heating unit 22, and thorough heat dissipation of the heating member 20, heating efficiency of the graphite heating tube 100 is improved. The first direction is a manually set direction, which may be a specific upward direction, a downward direction, a leftward direction, or a rightward direction.

In an exemplary embodiment of the present disclosure, each of the plurality of heating units 22 is formed as the curved segment with the opening facing towards the first direction. The heating member 20 comprises the plurality of heating units 22, and the plurality of heating units 22 are connected by the connection sheet. That is, the heating member 20 has a cyclic structure of: heating unit 22 + connection sheet + heating unit 22. Of course, a cyclic structure of: connection sheet + heating unit 22 + connection sheet may also be adopted.

In another exemplary embodiment of the present disclosure, the connection sheet is connected to a middle portion of the curved segment. In other words, the curved segment is partially suspended, thus improving the heating efficiency.

In other embodiments, the connection sheet is connected to an end of the curved segment. By connecting the connection sheet to the end of the curved segment, the probability of the heating member 20 being in contact with the inner wall of the tube body 10 is reduced.

As illustrated in FIG. 4 and FIG. 5, in another exemplary embodiment of the present disclosure, each of the plurality of heating units 22 comprises two heating side walls 221 arranged in parallel. A spacing between the two heating side walls 221 is a first spacing L1. A spacing between adjacent heating units 22 of the plurality of heating units 22 is a second spacing L2. The first spacing L1 is equal to the second spacing L2. The first spacing L1 between the two heating side walls 221 is set to be equal to the second spacing L2 between the adjacent heating units 22 of the plurality of heating units 22, in such a manner that the heating member 20 is heated uniformly, and heat around the heating member 20 is consistent, thus improving heating uniformity.

Each of the plurality of heating units 22 comprises the two heating side walls 221 arranged in parallel. Heat is generated by such planes of the two heating side walls 221, in such a manner that a heated plane receives more energy and a heating speed is improved.

In an exemplary embodiment of the present disclosure, the two heating side walls 221 are spaced apart from each other by the first spacing L1 and heat the surrounding air. Two adjacent heating units 22 are spaced apart from each other by the second spacing L2. The heating side walls 221 of the two adjacent heating units 22 have a same influence range, enabling the heating member 20 to be heated uniformly.

In another exemplary embodiment of the present disclosure, the first spacing L1 is 0.5 mm, and a thickness of the heating member 20 ranges from 0.1 mm to 0.3 mm. By setting the thickness of the heating member 20 with the first spacing L1 of 0.5 mm to be in a range of 0.1 mm to 0.3 mm, the heating member 20 satisfies requirements for both strength and manufacturing process yield rate.

Through extensive experiments and research, the inventor of the present disclosure has found that a graphene material is a brittle material, and the graphite sheet made of the graphene material generally has a very low elastic modulus. As a result, the graphite sheet is prone to fracture under tension during mounting or under a thermal shock load of an instantaneous high temperature of 1000°C during energized heating after mounting, resulting in failure of the heating tube. Based on a calculation formula of an elastic modulus of an elastic material, an inherent strength of the material can be improved by increasing a material thickness. However, increasing the material thickness is accompanied by manufacturing process problems. Related process for manufacturing the graphite sheet comprises pressing the graphene material with a porous medium structure into a sheet material by physical lamination, and then cutting the sheet material into a shape illustrated in FIG. 5 by using a die cutter. In this process, after a thickness of the graphite sheet is increased to a certain level, a shearing stress on a section during die cutting decreases accordingly. Therefore, adhesion between the graphite materials easily occurs in a cutting process, resulting in burrs on finished products after cutting and thus producing defective products. In this regard, the thickness of the graphene material has always been a contradictory point.

For the manufacturing process, to quickly cut off the graphite sheet and reduce the burrs, an overall shearing stress range shall be greater than 4 MPa. To ensure no failure during an actual operation, tensile strength of the graphite sheet shall be greater than 3.5 MPa. Through extensive simulation and experimental research, the inventor of the present disclosure has found that with a cut type at a spacing of 0.5 mm, when the thickness ranges from 0.1 mm to 0.3 mm, the requirements for both the strength and the manufacturing process can be satisfied.

6

The details are as follows. For a graphite sheet with a cut type at the spacing of 0.5 mm, when the thickness is 0.1 mm, the tensile strength is 3.5 MPa, and the shearing stress is 15 MPa. When the thickness is 0.2 mm, the tensile strength is 7.3 MPa, and the shearing stress is 9.8 MPa. When the thickness is 0.3 mm, the tensile strength is 10.7 MPa, and the shearing stress is 4.3 MPa.

For example, the thickness of the heating member 20 is 0.1 mm. Alternatively, the thickness of the heating member 20 is 0.15 mm. Alternatively, the thickness of the heating member 20 is 0.2 mm. Alternatively, the thickness of the heating member 20 is 0.25 mm. Alternatively, the thickness of the heating member 20 is 0.3 mm.

In an exemplary embodiment of the present disclosure, the thickness of the heating member 20 is 0.2 mm. By setting the thickness to 0.2 mm, a margin of approximately one time is retained for both the shearing stress and the tensile strength at this thickness, improving overall reliability.

In another exemplary embodiment of the present disclosure, the tube body 10 is a circular tube. By constructing the tube body 10 as the circular tube, the heating member 20 is facilitated to be encapsulated into the tube body 10, the probability of damage in a press-sealing process is reduced, and the yield rate is further improved.

In an exemplary embodiment of the present disclosure, the circular tube has a circular cross-section. In a process that the heating member 20 is inserted into the circular tube, distances from the heating member 20 to various portions of an inner wall of the circular tube are similar. Thus, the heating member 20 is relatively easy to control.

In other embodiments, the tube body 10 is a prismatic tube. In an exemplary embodiment of the present disclosure, the prismatic tube has a prismatic cross-section.

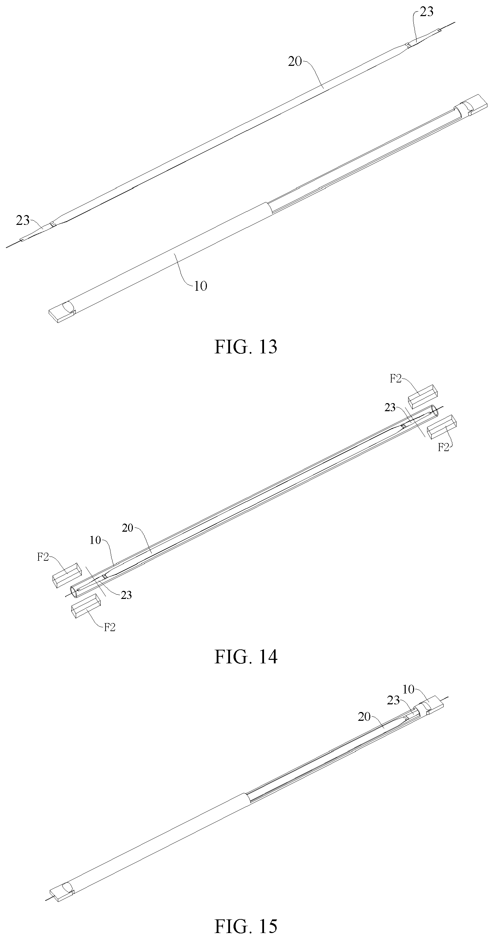

As illustrated in FIG. 4 and FIG.13, in another exemplary embodiment of the present disclosure, each of two ends of the heating member 20 in the length direction of the heating member 20 is connected to a connection terminal 23, the connection terminal 23 being press-sealed and fixed to the tube body 10, and a portion of the connection terminal 23 extending out of the tube body 10. The connection terminal 23 is press-sealed and fixed to the tube body 10, in such a manner that the heating member 20 is stabilized within the tube body 10.

In an exemplary embodiment of the present disclosure, a press-sealing process is as follows. First, the heating member is gently inserted into the tube body to ensure an appropriate extension length at each of two ends of the connection terminal. Then, two ends of the tube body are locally heated to a molten state by means such as flame heating, after which pressing blocks at two sides of the tube body are automatically and rapidly closed to squeeze the molten tube body. Upon cooling of the tube body, the connection terminal is press-sealed to the tube body, thus forming a vacuum enclosed space and completing the process of encapsulating the heating member in the tube body.

In another exemplary embodiment of the present disclosure, the connection terminal 23 comprises a main body portion 231 and an encapsulation portion 232. The main body portion 231 is connected to the heating member 20. The encapsulation portion 232 is connected to the main body portion 231, and is press-sealed and fixed to the tube body 10. An included angle is formed between the main body portion 231 and the encapsulation portion 232. By forming the included angle between the main body portion 231 and the encapsulation portion 232, the probability of problems such as gas leakage from the graphite heating tube 100 and cracks occurring on the heating member 20 and the connection terminal 23 during the press-sealing and fixing of the connection terminal 23 to the tube body 10 is reduced.

In the related art, during encapsulation of the graphite sheet into the quartz tube, the graphite sheet is inserted into the quartz tube relatively randomly. When the quartz tube is cooled and solidified, the graphite sheet is subjected to force, which may result in deformation and twisting of the graphite sheet, and the graphite sheet may be pressed against an inner wall of the quartz tube. These various situations cause cracks on the graphite sheet, leading to a low yield rate. In the present disclosure, by forming the included angle between the main body portion 231 and the encapsulation portion 232, and by pre-forming the included angle between the main body portion 231 and the encapsulation portion 232, deformation of the heating member 20 during cooling and solidification of the tube body 10 is improved, the probability of crack formation is reduced, and a yield rate of encapsulation manufacturing is increased.

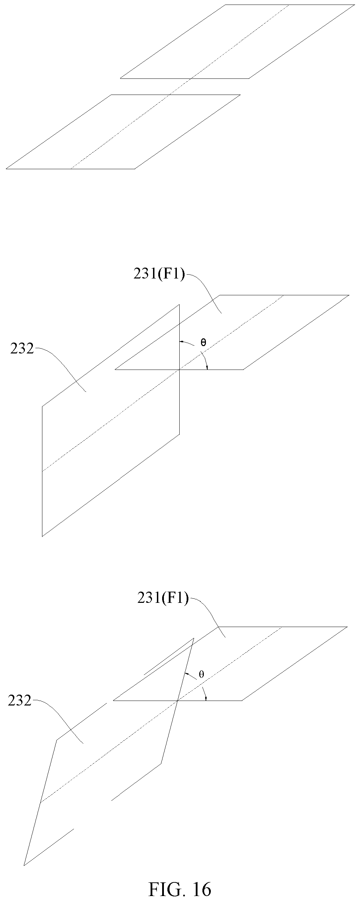

In another exemplary embodiment of the present disclosure, the included angle θ between the main body portion 231 and the encapsulation portion 232 is 180°. In an exemplary embodiment of the present disclosure, the tube body 10 is a straight tube, and a state of the straight tube is shown in FIG. 13 and FIG. 16, with the included angle θ being 180°. During parallel encapsulation, the graphite sheet is parallel to a press-sealing plane, in such a manner that the graphite sheet is free from stretching or twisting deformation during insertion. In addition, during melting and press-sealing, the terminals at the two ends are less likely to form an uneven molding state with the press-sealing plane, reducing cracks on the terminals and gas leakage at a press-sealed tube end.

In another exemplary embodiment of the present disclosure, the main body portion 231 is arranged to be perpendicular to the encapsulation portion 232. The main body portion 231 is arranged to be perpendicular to the encapsulation portion 232, in such a manner that the heating member 20 can be easily inserted into the tube body 10 without damage such as stretching, twisting or bending, thus ensuring the integrity of the encapsulation of the heating member 20. Meanwhile, during melting and press-sealing, a parallel state between the connection terminal 23 and a tube end of the tube body 10 can be maintained, which greatly reduces the cracks on the connection terminal 23 and the gas leakage at the tube end.

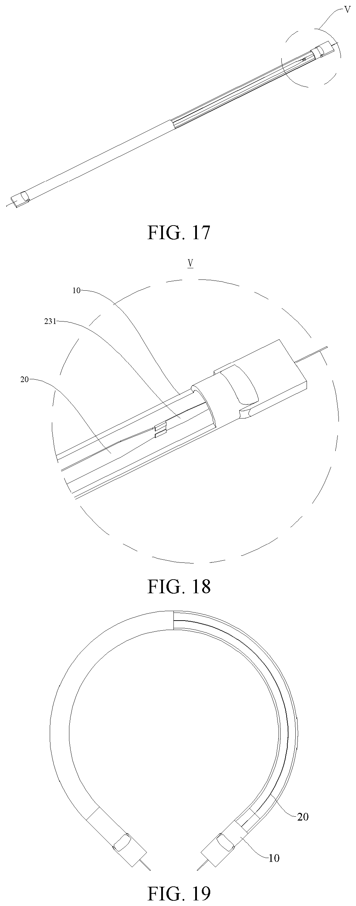

For example, the tube body 10 is the straight tube, and a state of the heating member 20 of the straight tube is shown in FIG. 17 and FIG. 18, with the included angle θ being 90°. Before the graphite sheet is gently inserted, the terminals at the two ends are twisted and bent by 90°, in such a manner that a neutral surface of the inserted graphite sheet is perpendicular to a press-sealing neutral surface of a to-be-formed quartz tube end, and the terminals are parallel to the press-sealing plane of the tube end. Vertical encapsulation of the straight tube also prevents cracks on the terminals and the gas leakage at the tube end, and also avoids the stretching and the twisting deformation of the graphite sheet.

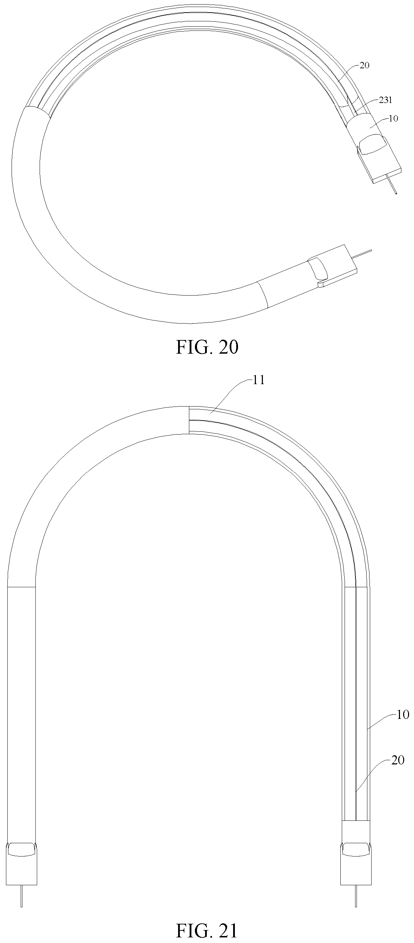

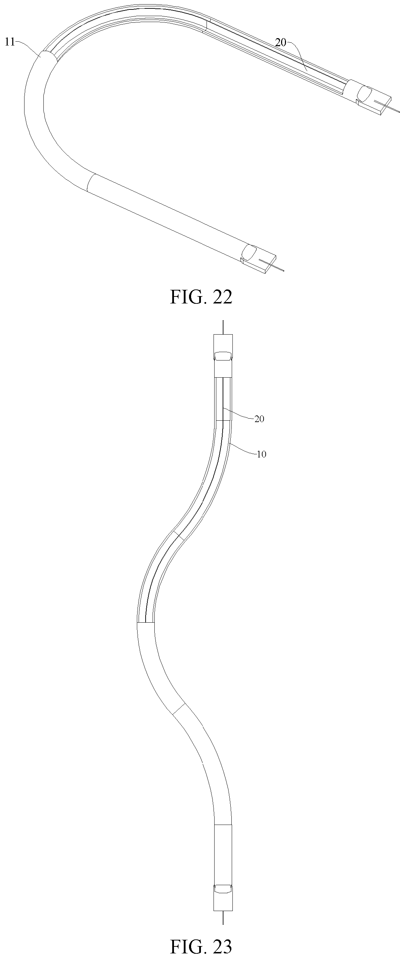

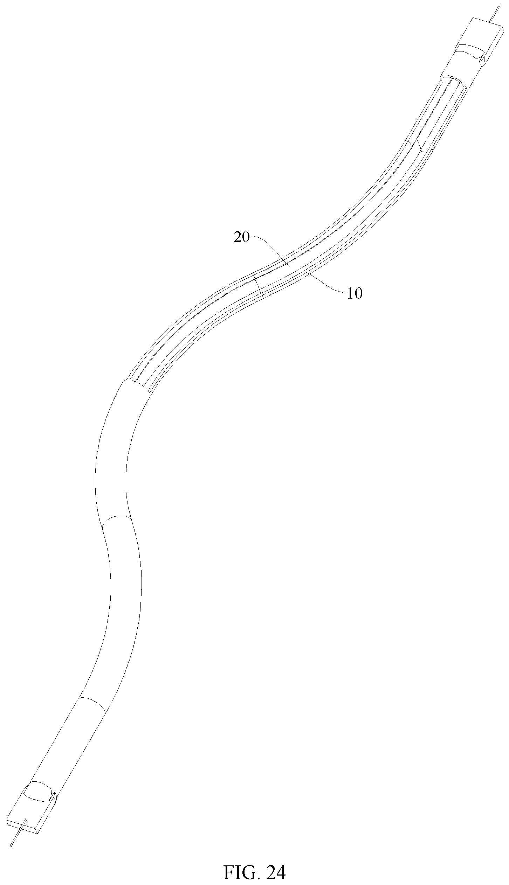

Alternatively, the tube body 10 is any one of the annular tube, the U-shaped tube, and the S-shaped tube, and the included angle θ is 90°, in such a manner that the neutral surface F1 is perpendicular to the press-sealing neutral surface of the tube end of the tube body 10. Press-sealing and encapsulation of the annular tube is shown in FIG. 19 and FIG. 20. When the heating member 20 is inserted into the annular tube, such a perpendicular state with the included angle θ of 90° allows the heating member 20 to be inserted smoothly along a neutral surface of the annular tube, and the heating member 20 is not prone to the stretching or the twisting deformation. During melting and press-sealing, the connection terminal 23 can also be maintained parallel to the press-sealing plane of the tube end of the tube body 10, reducing the cracks on the connection terminal 23 and the gas leakage at the press-sealed tube end. Press-sealing and encapsulation of the U-shaped tube is shown in FIG. 21 and FIG. 22. Similar to the annular tube, the heating member 20 can also be ensured to pass through a semicircular portion smoothly, thus ensuring a manufacturing yield during insertion and encapsulation. Press-sealing and encapsulation of the S-shaped tube is shown in FIG. 23 and FIG. 24. Similarly to the annular tube and the U-shaped tube, when the heating member 20 passes through the bent portion 11 of the tube body 10, the heating member 20 is not prone to the stretching or the twisting deformation. Meanwhile, the gas leakage and the cracks at the tube end rarely occur during melting and press-sealing of the connection terminal 23.

In an exemplary embodiment of the present disclosure, occurrence rates of various defects for a C-1 circular tube before process improvement are as follows: graphite sheet film breakage 1.13%, graphite sheet scratching 3.62%, graphite sheet twisting 2.83%, graphite sheet creasing 5.51%, molybdenum sheet cracking 6.82%, molybdenum sheet wrinkling 6.78%, press-sealing bubbles 7.58%, press-sealing leakage 5.31%, total 39.58%. After the process improvement, the rates are as follows: graphite sheet film breakage 0.54%, graphite sheet scratching 1.45%, graphite sheet twisting 2.13%, graphite sheet creasing 2.55%, molybdenum sheet cracking 1.97%, molybdenum sheet wrinkling 2.96%, press-sealing bubbles 2.65%, press-sealing leakage 1.62%, total 15.87%. A yield improvement rate before and after improvement is 23.7%.

In an exemplary embodiment of the present disclosure, occurrence rates of various defects for a C-2 circular tube before process improvement are as follows: graphite sheet film breakage 1.15%, graphite sheet scratching 3.11%, graphite sheet twisting 2.65%, graphite sheet creasing 5.16%, molybdenum sheet cracking 6.95%, molybdenum sheet wrinkling 6.12%, press-sealing bubbles 7.74%, press-sealing leakage 5.46%, total 38.34%. After the process improvement, the rates are as follows: graphite sheet film breakage 0.52%, graphite sheet scratching 1.41%, graphite sheet twisting 2.15%, graphite sheet creasing 2.52%, molybdenum sheet cracking 1.82%, molybdenum sheet wrinkling 2.84%, press-sealing bubbles 2.53%, press-sealing leakage 1.56%, total 15.35%. A yield improvement rate before and after improvement is 23.0%.

In an exemplary embodiment of the present disclosure, occurrence rates of various defects for a U-1 U-shaped tube before process improvement are as follows: graphite sheet film breakage 1.12%, graphite sheet scratching 3.82%, graphite sheet twisting 2.74%, graphite sheet creasing 5.37%, molybdenum sheet cracking 6.72%, molybdenum sheet wrinkling 6.25%, press-sealing bubbles 7.32%, press-sealing leakage 4.9%, total 38.24%. After the process improvement, the rates are as follows: graphite sheet film breakage 0.52%, graphite sheet scratching 1.43%, graphite sheet twisting 2.16%, graphite sheet creasing 2.47%, molybdenum sheet cracking 1.94%, molybdenum sheet wrinkling 2.94%, press-sealing bubbles 2.42%, press-sealing leakage 1.51%, total 15.39%. A yield improvement rate before and after improvement is 22.9%.

In an exemplary embodiment of the present disclosure, occurrence rates of various defects for an S-1 S-shaped tube before process improvement are as follows: graphite sheet film breakage 1.10%, graphite sheet scratching 3.78%, graphite sheet twisting 2.81%, graphite sheet creasing 5.11%, molybdenum sheet cracking 6.42%, molybdenum sheet wrinkling 6.85%, press-sealing bubbles 7.12%, press-sealing leakage 4.77%, total 37.96%. After the process improvement, the rates are as follows: graphite sheet film breakage 0.51%, graphite sheet scratching 1.46%, graphite sheet twisting 2.18%, graphite sheet creasing 2.49%, molybdenum sheet cracking 1.81%, molybdenum sheet wrinkling 2.87%, press-sealing bubbles 2.42%, press-sealing leakage 1.55%, total 15.29%. A yield improvement rate before and after improvement is 22.7%.

In an exemplary embodiment of the present disclosure, occurrence rates of various defects for an S-1 S-shaped tube before process improvement are as follows: graphite sheet film breakage 1.11%, graphite sheet scratching 3.73%, graphite sheet twisting 2.92%, graphite sheet creasing 5.05%, molybdenum sheet cracking 6.38%, molybdenum sheet wrinkling 6.81%, press-sealing bubbles 7.04%, press-sealing leakage 4.63%, total 37.67%. After the process improvement, the rates are as follows: graphite sheet film breakage 0.58%, graphite sheet scratching 1.41%, graphite sheet twisting 2.20%, graphite sheet creasing 2.41%, molybdenum sheet cracking 1.86%, molybdenum sheet wrinkling 2.81%, press-sealing bubbles 2.34%, press-sealing leakage 1.48%, total 15.09%. A yield improvement rate before and after improvement is 22.6%.

In summary, a defect rate of the graphite heating tube is significantly reduced, and an overall yield rate is increased by approximately 23%.

A specific embodiment of the graphite heating tube 100 of the present disclosure will be described below with reference to FIG. 1 to FIG. 24.

The graphite heating tube 100 comprises the tube body 10 and the heating member 20.

The tube body 10 is a hollow quartz tube. The tube body 10 is U-shaped. The tube body 10 is a circular tube with a circular cross-section. The tube body 10 has the bent portion 11 formed as the circular arc shape. The bent portion 11 has the reference line passing through the center of the bent portion 11 and perpendicular to the radial direction of the bent portion 11.

The heating member 20 is formed as the sheet-shaped graphene-material member and passes through the tube body 10. The heating member 20 comprises the plurality of heating units 22 sequentially arranged in the length direction of the heating member 20. Each of the plurality of heating units 22 is formed as the curved segment with the opening facing towards the first direction. The adjacent heating units 22 of the plurality of heating units 22 are connected by the connection sheet. The connection sheet is connected to the end of the curved segment. Each of the plurality of heating units 22 comprises the two heating side walls 221 arranged in parallel. The spacing between the two heating side walls 221 is the first spacing L1. The spacing between the adjacent heating units 22 of the plurality of heating units 22 is the second spacing L2. The first spacing L1 is equal to the second spacing L2. The first spacing L1 is 0.5 mm. The thickness of the heating member 20 is 0.2 mm.

Each of the two ends of the heating member 20 in the length direction of the heating member 20 is connected to the connection terminal 23, the connection terminal 23 being press-sealed and fixed to the tube body 10, and the portion of the connection terminal 23 extending out of the tube body 10. The connection terminal 23 comprises the main body portion 231 and the encapsulation portion 232. The main body portion 231 is connected to the heating member 20. The encapsulation portion 232 is connected to the main body portion 231, and is press-sealed and fixed to the tube body 10. The main body portion 231 is arranged to be perpendicular to the encapsulation portion 232.

In the thickness direction of the heating member 20, the heating member 20 has the neutral surface F1 located at the center of the heating member 20 and extending in the length direction of the tube body 10. At least the portion of the neutral surface F1 that faces the bent portion 11 is arranged parallel to the reference line. The curvature radius of the central axis of the bent portion 11 is R1, and the curvature radius of the portion of the neutral surface F1 that faces the bent portion 11 is R2, where (R2/R1) is 1.

A cooking device according to the embodiments of the present disclosure comprises the above-described graphite heating tube 100.

The cooking device according to the embodiments of the present disclosure is configured such that at least the portion of the neutral surface F1 that faces the bent portion 11 is parallel to the reference line, so that the heating member 20 is not twisted by the external forces, allowing the heating member 20 to be smoothly inserted into the tube body 10, thus improving the yield rate, significantly enhancing the production efficiency, and saving the costs.

In another exemplary embodiment of the present disclosure, the cooking device comprises a box body, a drawer member, and the graphite heating tube 100.

The box body has a drawing opening at a front side of the box body.

The drawer member is used for holding food. The drawer member is drawable relative to the box body through the drawing opening.

The graphite heating tube 100 is disposed in the box body to heat an interior of the box body.

The drawer member is used for holding the food. Compared with a solution in the related art where a food-carrying space is fixed inside a cooking appliance, the present disclosure facilitates placing and taking out the food.

For example, the cooking device is an oven, or the cooking device is an air fryer, or the cooking device is a microwave oven.

Other configurations and operations of the graphite heating tube 100 according to embodiments of the present disclosure are known to those skilled in the art, which will not be described in detail herein.

In the description of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the features associated with "first" and "second" may explicitly or implicitly comprise one or more features, which are used to distinguish and describe the features, without any order or priority.

In the description of the present disclosure, "plurality" means at least two, unless otherwise specifically defined.

In the description of the present disclosure, it should be noted that, unless otherwise clearly specified and limited, terms such as "install", "connect", "connect to", and the like should be understood in a broad sense. For example, it may be a fixed connection or a detachable connection or connection as one piece, mechanical connection or electrical connection, direct connection or indirect connection through an intermediate, internal communication of two components or the interaction relationship between two components. For those skilled in the art, the specific meaning of the above-described terms in the present disclosure can be understood according to specific circumstances.

Reference throughout this specification to "an embodiment", "an example", etc., means that a particular feature, structure, material, or characteristic described in connection with the embodiment or example is comprised in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

**Claims**

1. A graphite heating tube, comprising:

    a tube body, wherein the tube body is hollow and has at least one bent portion, the at least one bent portion being formed as a circular arc shape, wherein a reference line is defined as a line passing through a center of the bent portion and perpendicular to a radial direction of the bent portion; and
    a heating member formed as a sheet-shaped graphene-material member, the heating member being disposed in and passing through the tube body, wherein the heating member is provided with a neutral surface centrally located in a thickness direction of the heating member, the neutral surface extending in a length direction of the tube body, and at least a portion, facing the bent portion, of the neutral surface being arranged parallel to the reference line.

2. The graphite heating tube according to claim 1, wherein a curvature radius of a central axis of the bent portion is R1, and a curvature radius of the portion, facing the bent portion, of the neutral surface is R2, R1 and R2 satisfying $0.95 \leq (R2/R1) \leq 1.05$.

3. The graphite heating tube according to claim 1 or 2, wherein the heating member comprises a plurality of heating units sequentially arranged in a length direction of the heating member, wherein:

    each of the plurality of heating units is formed as a curved segment with an opening facing towards a first direction; and
    adjacent heating units of the plurality of heating units are connected by a connection sheet.

4. The graphite heating tube according to claim 3, wherein the connection sheet is connected to an end of the curved segment.

5. The graphite heating tube according to claim 3 or 4, wherein each of the plurality of heating units comprises two heating side walls arranged in parallel, wherein:

    a spacing between the two heating side walls is a first spacing; and
    a spacing between adjacent heating units of the plurality of heating units is a second spacing, the first spacing being equal to the second spacing.

6. The graphite heating tube according to claim 5, wherein:

    the first spacing is 0.5 mm; and
    a thickness of the heating member ranges from 0.1 mm to 0.3 mm.

7. The graphite heating tube according to claim 6, wherein the thickness of the heating member is 0.2 mm.

8. The graphite heating tube according to any one of claims 1 to 7, wherein the tube body is a circular tube.

9. The graphite heating tube according to any one of claims 1 to 8, wherein each of two ends of the heating member in a length direction of the heating member is connected to a connection terminal, the connection terminal being press-sealed and fixed to the tube body, and a portion of the connection terminal extending out of the tube body.

10. The graphite heating tube according to claim 9, wherein the connection terminal comprises a main body portion and an encapsulation portion, wherein:

the main body portion is connected to the heating member;
the encapsulation portion is connected to the main body portion, and is press-sealed and fixed to the tube body; and
an included angle is formed between the main body portion and the encapsulation portion.

11. The graphite heating tube according to claim 10, wherein the main body portion is arranged to be perpendicular to the encapsulation portion.

12. A cooking device, comprising a graphite heating tube according to any one of claims 1 to 11.

13. The cooking device according to claim 12, comprising:

a box body having a drawing opening at a front side of the box body;
a drawer member for holding food, the drawer member being drawable relative to the box body through the drawing opening; and
the graphite heating tube disposed in the box body to heat an interior of the box body.

FIG. 1

FIG. 2

FIG. 3

FIG. 4

FIG. 5

FIG. 6

FIG. 7

FIG. 8

FIG. 9

III

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

## INTERNATIONAL SEARCH REPORT

| International application No. |
|---|
| **PCT/CN2024/086629** |

| A. | CLASSIFICATION OF SUBJECT MATTER |
|---|---|

H05B 3/34(2006.01)i; H05B3/40(2006.01)i; F24H3/04(2022.01)i

According to International Patent Classification (IPC) or to both national classification and IPC

| B. | FIELDS SEARCHED |
|---|---|

Minimum documentation searched (classification system followed by classification symbols)

IPC: H05B3/-; F24H3/-

Documentation searched other than minimum documentation to the extent that such documents are included in the fields searched

Electronic data base consulted during the international search (name of data base and, where practicable, search terms used)

CNABS, CNTXT, ENTXTC, DWPI, CJFD: 管, 发热, 加热, 石墨, 弯折, 中空, 曲率半径, pipe+, tube, heat+, graphite, bend+, hollow, cavity, radius of curvature

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 215268767 U (GUANGDONG MIDEA KITCHEN APPLIANCES MANUFACTURING CO., LTD. et al.) 21 December 2021 (2021-12-21) description, paragraphs 3-19, and figure 1 | 1, 2, 8-13 |
| Y | CN 215268767 U (GUANGDONG MIDEA KITCHEN APPLIANCES MANUFACTURING CO., LTD. et al.) 21 December 2021 (2021-12-21) description, paragraphs 3-19, and figure 1 | 3-7 |
| Y | CN 217283440 U (GUANGDONG MORION NANOTECH CO., LTD.) 23 August 2022 (2022-08-23) description, paragraphs 5-15 | 3-7 |
| A | US 5965050 A (VACUUM FURNACE SYSTEMS CORP.) 12 October 1999 (1999-10-12) description, columns 1-3 | 1-13 |
| A | WO 2022089242 A1 (GUANGDONG MIDEA KITCHEN APPLIANCES MANUFACTURING CO., LTD. et.al) 05 May 2022 (2022-05-05) description, pages 1-3 | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2024** | **28 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/086629**

| Patent document cited in search report | | | Publication date (day/month/year) | Patent family member(s) | | | Publication date (day/month/year) |
|---|---|---|---|---|---|---|---|
| CN | 215268767 | U | 21 December 2021 | None | | | |
| CN | 217283440 | U | 23 August 2022 | None | | | |
| US | 5965050 | A | 12 October 1999 | None | | | |
| WO | 2022089242 | A1 | 05 May 2022 | JP | 2023537560 | A | 04 September 2023 |
| | | | | US | 2023276540 | A1 | 31 August 2023 |
| | | | | EP | 4145955 | A1 | 08 March 2023 |
| | | | | EP | 4145955 | A4 | 13 December 2023 |
| | | | | CN | 112188655 | A | 05 January 2021 |
| | | | | CN | 213754997 | U | 20 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311793122